# FASCICULE DE BREVET EUROPEEN

(11) **EP 3 409 536 B1**
(45) Date de publication et mention de la délivrance du brevet: **08.12.2021**
(21) Numéro de dépôt: 18175263.5
(22) Date de dépôt: 30.05.2018
(51) Int. Cl.: B60N 2/829, B60N 2/888, B60N 2/894, B60N 2/821

(54) **APPUI-TÊTE DE SIÈGE DE VÉHICULE AUTOMOBILE**
KOPFSTÜTZE FÜR KRAFTFAHRZEUGSITZ
HEADREST FOR A MOTOR VEHICLE SEAT

(30) Priorité: 30.05.2017 FR 1754763
(43) Date de publication de la demande: 05.12.2018
(73) Titulaire: TESCA France, 75008 Paris (FR)
(72) Inventeur: GEORGES, Laurent, 75008 PARIS (FR)
(74) Mandataire: Sayettat, Julien Christian

(56) Documents cités:
- EP-A1- 2 698 277
- DE-B3-102012 025 191

## Description

L'invention concerne un appui-tête de siège de véhicule automobile.

Il est connu, de réaliser un appui-tête de siège de véhicule automobile, ledit appui-tête comprenant :
- une armature métallique repliée en forme générale de U renversé définissant deux branches parallèles de liaison au dossier dudit siège et une entretoise de liaison desdites branches entre elles,
- un boitier en matériau plastique moulé d'absorption d'énergie en cas de choc de la tête d'un passager sur ledit appui-tête, ledit boitier comprenant deux conduits de réception desdites tiges en coulissement, ledit boitier étant pourvu d'une face avant de réception d'un coussin d'appui-tête,
- un dispositif de réglage en hauteur dudit boitier par rapport auxdites tiges, de manière à permettre un réglage en hauteur dudit coussin, ledit dispositif comprenant :
   ∘ un moteur électrique monté solidairement audit boitier,
   ∘ une tige filetée verticale montée en rotation dans ledit boitier en coopération avec ledit moteur de manière à être mise en rotation dans un sens ou dans l'autre par actionnement dudit moteur dans un sens ou dans l'autre,
   ∘ un moyen de réception de ladite tige au travers d'un orifice fileté prévu dans ledit moyen, ledit moyen étant fixé solidairement à ladite entretoise.

Dans un tel agencement, il est connu de disposer le moyen de réception à proximité immédiate de l'entretoise.

Il en résulte que la tige filetée est fortement maintenue en position du fait de sa proximité directe avec l'entretoise qui présente une capacité très limitée à la déformation, puisqu'elle est partie d'une armature qui doit, par nature, être très robuste.

Ainsi, en cas de choc appliqué par une tête sur la face de réception du boitier, la tige filetée, qui s'étend en arrière de ladite face, présente un point d'ancrage très ferme non propice à la dissipation d'énergie et donc peu favorable à la sécurité de l'occupant.

En outre, lorsque le boitier n'est pas réglé en position maxi-basse, la tige filetée est saillante au-dessus de l'entretoise, et ceci d'autant plus que le boitier est amené en hauteur.

Malgré la présence du boitier, un tel agencement présente un risque pour un occupant heurtant l'appui-tête par le haut - ledit occupant étant notamment disposé sur un siège en arrière dudit appui-tête - de voir sa tête entrer en contact avec l'extrémité supérieure de la tige filetée, ce qui présente un danger.

DE102012025191 B3 montre un appui-tête avec une armature en forme de U renversé et un dispositif de réglage en hauteur.

L'invention a pour but de pallier ces inconvénients.

A cet effet, l'invention propose un appui-tête de siège de véhicule automobile, ledit appui-tête comprenant :
- une armature métallique repliée en forme générale de U renversé définissant deux branches parallèles de liaison au dossier dudit siège et une entretoise de liaison desdites branches entre elles,
- un boitier en matériau plastique moulé d'absorption d'énergie en cas de choc de la tête d'un passager sur ledit appui-tête, ledit boitier comprenant deux conduits de réception desdites tiges en coulissement, ledit boitier étant pourvu d'une face avant de réception d'un coussin d'appui-tête,
- un dispositif de réglage en hauteur dudit boitier par rapport auxdites tiges, de manière à permettre un réglage en hauteur dudit coussin, ledit dispositif comprenant :
   ∘ un moteur électrique monté solidairement audit boitier,
   ∘ une tige filetée verticale montée en rotation dans ledit boitier en coopération avec ledit moteur de manière à être mise en rotation dans un sens ou dans l'autre par actionnement dudit moteur dans un sens ou dans l'autre,
   ∘ un moyen de réception de ladite tige au travers d'un orifice fileté prévu dans ledit moyen, ledit moyen étant fixé solidairement à ladite entretoise,
ledit moyen étant fixé à ladite entretoise par l'intermédiaire d'un organe d'écartement le décalant vers le bas par rapport à ladite entretoise, de sorte que ladite tige ne soit sensiblement pas saillante au-dessus de ladite entretoise quand ledit boitier est réglé en position maxi-haute.

Dans cette description, les termes de positionnement dans l'espace (haut, bas, latéral, avant, arrière, vertical, inférieur, dessus, dessous,...) sont pris en référence à un appui-tête monté dans le véhicule en situation d'utilisation.

Avec un tel agencement, la tige filetée n'est plus fermement bloquée par l'entretoise puisqu'elle lui est associée par l'intermédiaire de l'organe d'écartement qui peut permettre une absorption d'énergie par déformation - notamment par débattement angulaire entre ladite tige filetée et ledit organe et/ou par étirement dudit organe - en cas de choc appliqué par une tête sur la face de réception du boitier.

En outre, la tige filetée n'est pas saillante au-dessus de l'entretoise, et ceci quel que soit le réglage en hauteur du boitier, ce qui élimine le risque de voir la tête d'un passager, heurtant l'appui-tête par le haut, entrer en contact avec l'extrémité supérieure de la tige filetée.

D'autres particularités et avantages de l'invention apparaîtront dans la description qui suit, faite en référence aux figures jointes, dans lesquelles :

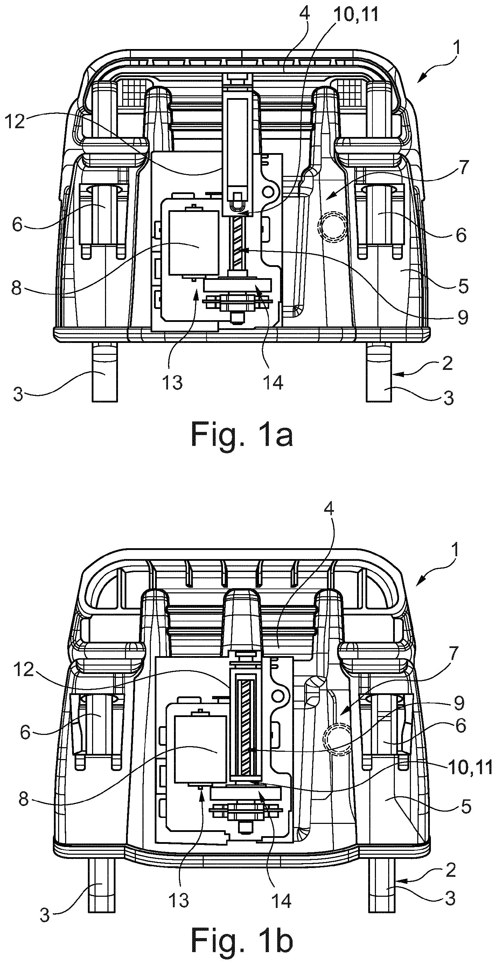

- les figures 1a et 1b sont des vues schématiques de face d'un appui-tête selon une réalisation, le boitier étant réglé en position maxi-basse (1a) et maxi-haute (1b),
- les figures 2a et 2b sont des vues schématiques latérales partielles de l'appui-tête des figures 1a et 1b, avant (2a) et pendant (2b) un choc de la tête d'un passager du siège sur la face de réception du boitier, ledit boitier étant réglé en position maxi-basse.

En référence aux figures, on décrit un appui-tête 1 de siège de véhicule automobile, ledit appui-tête comprenant :
- une armature 2 métallique - notamment tubulaire - repliée en forme générale de U renversé - étant formée en une ou plusieurs parties pouvant notamment être emboitées les unes avec les autres - définissant deux branches 3 parallèles de liaison au dossier dudit siège et une entretoise 4 de liaison desdites branches entre elles,
- un boitier 5 en matériau plastique moulé d'absorption d'énergie en cas de choc de la tête d'un passager sur ledit appui-tête, ledit boitier comprenant deux conduits 6 de réception desdites tiges en coulissement, ledit boitier étant pourvu d'une face avant de réception 7 d'un coussin d'appui-tête,
- un dispositif de réglage en hauteur dudit boitier par rapport auxdites tiges, de manière à permettre un réglage en hauteur dudit coussin, ledit dispositif comprenant :
   ∘ un moteur électrique 8 monté solidairement audit boitier,
   ∘ une tige filetée 9 verticale montée en rotation dans ledit boitier en coopération avec ledit moteur de manière à être mise en rotation dans un sens ou dans l'autre par actionnement dudit moteur dans un sens ou dans l'autre,
   ∘ un moyen de réception 10 de ladite tige au travers d'un orifice fileté 11 prévu dans ledit moyen, ledit moyen étant fixé solidairement à ladite entretoise,
ledit moyen étant fixé à ladite entretoise par l'intermédiaire d'un organe d'écartement 12 le décalant vers le bas par rapport à ladite entretoise, de sorte que ladite tige ne soit sensiblement pas saillante au-dessus de ladite entretoise quand ledit boitier est réglé en position maxi-haute.

De façon non représentée, le boitier 5 est pourvu de paliers de guidage en coulissement des branches 3 au travers d'orifices prévus dans lesdits paliers.

Selon la réalisation représentée :
- l'organe 12 présente une hauteur correspondant sensiblement à la moitié de la hauteur du boitier 5,
- la tige filetée 9 s'étend sensiblement sur la moitié inférieure dudit boitier.

Selon la réalisation représentée, le moteur 8 est situé latéralement par rapport à la tige filetée 9, de manière à être situé en moitié inférieure du boitier 5 pour être en-dessous de la tête d'un occupant du siège, ce qui est favorable pour sa sécurité.

Selon la réalisation représentée, le moteur 8 est pourvu d'une première roue dentée 13 engrenant, ici directement, ou indirectement par l'intermédiaire d'un dispositif de démultiplication selon une variante non représentée, avec une deuxième roue dentée 14 montée en extrémité inférieure de la tige filetée 9.

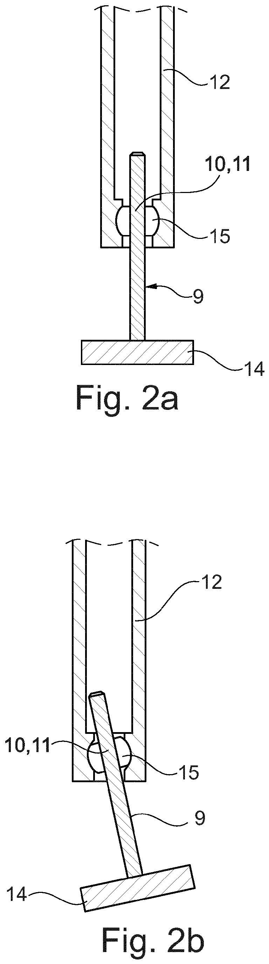

Selon la réalisation représentée, explicitée en figures 2a et 2b, le moyen de réception 10 est monté pivotant sur l'organe 12, ici par un système de rotule 15, de manière à permettre un débattement angulaire (cf. figure 2b) de la tige filetée 9 par rapport audit organe en cas de choc appliqué par une tête sur la face de réception 7 du boitier 5, afin de permettre une absorption d'énergie additionnelle à celle apportée par ledit boitier.

Selon une réalisation non représentée, l'organe 12 est agencé pour pouvoir se déformer plastiquement en traction - sous l'effet de la tige filetée 9 exerçant une traction vers le bas se répercutant sur ledit organe - en cas de choc appliqué par une tête sur le haut de l'appui-tête 1, la tête en question étant notamment celle d'un occupant d'un siège disposé en arrière du siège pourvu dudit appui-tête, afin de permettre une absorption d'énergie additionnelle à celle apportée par le boitier 5.

Par exemple, il peut être prévu, de façon non représentée, que l'organe 12 soit pourvu d'amorces de rupture ou d'allongement.

Selon la réalisation représentée, l'organe 12 est en forme générale de conduit de réception de la tige filetée 9, ledit conduit présentant notamment une forme générale de cylindre creux.

Selon une réalisation, l'organe 12 est à base de matériau plastique moulé.

Selon diverses réalisations, la tige filetée 9 est à base de métal, ou encore de matériau plastique moulé.

## Revendications

1. Appui-tête (1) de siège de véhicule automobile, ledit appui-tête comprenant :
• une armature (2) métallique repliée en forme générale de U renversé définissant deux branches (3) parallèles de liaison au dossier dudit siège et une entretoise (4) de liaison desdites branches entre elles,
• un boitier (5) en matériau plastique moulé d'absorption d'énergie en cas de choc de la tête d'un passager sur ledit appui-tête, ledit boitier comprenant deux conduits (6) de réception desdites tiges en coulissement, ledit boitier étant pourvu d'une face avant de réception (7) d'un coussin d'appui-tête,
• un dispositif de réglage en hauteur dudit boitier par rapport auxdites tiges, de manière à permettre un réglage en hauteur dudit coussin, ledit dispositif comprenant :
∘ un moteur électrique (8) monté solidairement audit boitier,
∘ une tige filetée (9) verticale montée en rotation dans ledit boitier en coopération avec ledit moteur de manière à être mise en rotation dans un sens ou dans l'autre par actionnement dudit moteur dans un sens ou dans l'autre,
∘ un moyen de réception (10) de ladite tige au travers d'un orifice fileté (11) prévu dans ledit moyen, ledit moyen étant fixé solidairement à ladite entretoise,
ledit appui-tête étant **caractérisé en ce que** ledit moyen est fixé à ladite entretoise par l'intermédiaire d'un organe d'écartement (12) le décalant vers le bas par rapport à ladite entretoise, de sorte que ladite tige ne soit sensiblement pas saillante au-dessus de ladite entretoise quand ledit boitier est réglé en position maxi-haute.

2. Appui-tête selon la revendication 1, **caractérisé en ce que** :
• l'organe (12) présente une hauteur correspondant sensiblement à la moitié de la hauteur du boitier (5),
• la tige filetée (9) s'étend sensiblement sur la moitié inférieure dudit boitier.

3. Appui-tête selon l'une des revendications 1 ou 2, **caractérisé en ce que** le moteur (8) est situé latéralement par rapport à la tige filetée (9), de manière à être situé en moitié inférieure du boitier (5) pour être en-dessous de la tête d'un occupant du siège.

4. Appui-tête selon l'une quelconque des revendications 1 à 3, **caractérisé en ce que** le moteur (8) est pourvu d'une première roue dentée (13) engrenant, directement ou indirectement par l'intermédiaire d'un dispositif de démultiplication, avec une deuxième roue dentée (14) montée en extrémité inférieure de la tige filetée (9).

5. Appui-tête selon l'une quelconque des revendications 1 à 4, **caractérisé en ce que** le moyen de réception (10) est monté pivotant sur l'organe (12), de manière à permettre un débattement angulaire de la tige filetée (9) par rapport audit organe en cas de choc appliqué par une tête sur la face de réception (7) du boitier (5), afin de permettre une absorption d'énergie additionnelle à celle apportée par ledit boitier.

6. Appui-tête selon l'une quelconque des revendications 1 à 5, **caractérisé en ce que** l'organe (12) est agencé pour pouvoir se déformer plastiquement en traction en cas de choc appliqué par une tête sur le haut dudit appui-tête, afin de permettre une absorption d'énergie additionnelle à celle apportée par le boitier (5).

7. Appui-tête selon l'une quelconque des revendications 1 à 6, **caractérisé en ce que** l'organe (12) est en forme générale de conduit de réception de la tige filetée (9).

## Patentansprüche

1. Kopfstütze (1) für einen Kraftfahrzeugsitz, wobei die Kopfstütze umfasst:
- ein gebogenes Metallgestell (2) in der allgemeinen Form eines umgekehrtes U, das zwei parallele Schenkel (3) zur Verbindung mit der Rückenlehne des Sitzes und eine Querstrebe (4) zur Verbindung der Schenkel miteinander definiert,
- ein Gehäuse (5) aus geformtem Kunststoffmaterial zur Absorption von Energie im Falle eines Aufpralls des Kopfes eines Insassen auf der Kopfstütze, wobei das Gehäuse zwei Rohre (6) zur verschiebbaren Aufnahme der Stangen umfasst, wobei das Gehäuse mit einer Vorderseite (7) zur Aufnahme eines Kopfstützenpolsters versehen ist,
- eine Vorrichtung zur Höhenverstellung des Gehäuses in Bezug auf die Stangen, um eine Höhenverstellung des Polsters zu ermöglichen, wobei die Vorrichtung umfasst:
-- einen Elektromotor (8), der fest am Gehäuse angebracht ist,
-- eine vertikale Gewindestange (9), die in Zusammenwirken mit dem Motor drehbar im Gehäuse angebracht ist, um durch Betätigung des Motors in eine oder in die andere Richtung in eine oder in die andere Richtung in Drehung versetzt zu werden,
-- ein Mittel (10) zur Aufnahme der Stange durch ein Gewindeloch (11), welches in dem Mittel vorgesehen ist,
wobei das Mittel fest an der Querstrebe befestigt ist,
wobei die Kopfstütze **dadurch gekennzeichnet ist, dass** das Mittel mittels eines Abstandselements (12) an der Querstrebe befestigt ist, welches es in Bezug auf die Querstrebe nach unten verlagert, sodass die Stange im Wesentlichen nicht über die Querstrebe überragt, wenn das Gehäuse in höchstmögliche Position gestellt ist.

2. Kopfstütze nach Anspruch 1, **dadurch gekennzeichnet, dass**:
- das Element (12) eine Höhe aufweist, die im Wesentlichen der halben Höhe des Gehäuses (5) entspricht,
- die Gewindestange (9) sich im Wesentlichen auf der unteren Hälfte des Gehäuses erstreckt.

3. Kopfstütze nach einem der Ansprüche 1 oder 2, **dadurch gekennzeichnet, dass** der Motor (8) in Bezug auf die Gewindestange (9) seitlich angeordnet ist, um so in der unteren Hälfte des Gehäuses (5) angeordnet zu sein, dass er sich unterhalb des Kopfes eines Nutzers des Sitzes befindet.

4. Kopfstütze nach einem der Ansprüche 1 bis 3, **dadurch gekennzeichnet, dass** der Motor (8) mit einem ersten Zahnrad (13) versehen ist, das direkt oder indirekt mittels einer Untersetzungsvorrichtung in ein zweites Zahnrad (14) eingreift, das am unteren Ende der Gewindestange (9) angebracht ist.

5. Kopfstütze nach einem der Ansprüche 1 bis 4, **dadurch gekennzeichnet, dass** das Aufnahmemittel (10) schwenkbar am Element (12) angebracht ist, um im Falle eines Aufpralls, der von einem Kopf auf die Aufnahmeseite (7) des Gehäuses (5) ausgeübt wird, einen Winkelausschlag der Gewindestange (9) in Bezug auf das Element zu ermöglichen, um eine zusätzliche Energieabsorption zu jener, die das Gehäuse erbringt, zu ermöglichen.

6. Kopfstütze nach einem der Ansprüche 1 bis 5, **dadurch gekennzeichnet, dass** das Element (12) so beschaffen ist, dass es sich im Falle eines Aufpralls, der von einem Kopf auf die Oberseite der Kopfstütze aufgebracht wird, plastisch zugverformen kann, um eine zusätzliche Energieabsorption zu jener, die das Gehäuse (5) erbringt, zu ermöglichen.

7. Kopfstütze nach einem der Ansprüche 1 bis 6, **dadurch gekennzeichnet, dass** das Element (12) die allgemeine Form eines Rohres zur Aufnahme der Gewindestange (9) aufweist.

## Claims

1. Headrest (1) for a motor vehicle seat, said headrest comprising:
• a metal frame (2) folded in a general inverted U-shape defining two parallel branches (3) for connecting to the backrest of said seat and a crosspiece (4) for connecting said branches together,
• a moulded plastic material casing (5) for absorbing energy in case of impact of the head of a passenger on said headrest, said casing comprising two conduits (6) for receiving said sliding rods, said casing being provided with a front face for receiving (7) a headrest cushion,
• a device for adjusting the height of said casing with respect to said rods, so as to allow a height adjustment of said cushion, said device comprising:
∘ an electric motor (8) securely mounted to said casing,
∘ a vertical threaded rod (9) rotatably mounted in said casing in engagement with said motor so as to be rotated in one direction or the other by actuation of said motor in one direction or the other,
∘ a means for receiving (10) said rod through a threaded orifice (11) provided in said means, said means being securely fixed to said crosspiece,
said headrest being **characterised in that** said means is fixed to said crosspiece by way of a spacing member (12) deviating it downwards with respect to said crosspiece, such that said rod is not substantially projecting above said crosspiece when said casing is adjusted in the maximum high position.

2. Headrest according to claim 1, **characterised in that**:
• the member (12) has a height substantially corresponding to one half of the height of the casing (5),
• the threaded rod (9) extends substantially over the lower half of said casing.

3. Headrest according to one of claims 1 or 2, **characterised in that** the motor (8) is located laterally with respect to the threaded rod (9), so as to be located in the lower half of the casing (5) to be below the head of an occupant of the seat.

4. Headrest according to any one of claims 1 to 3, **characterised in that** the motor (8) is provided with a first gearwheel (13) meshing, directly or indirectly by way of a gear device, with a second gearwheel (14) mounted at the lower end of the threaded rod (9).

5. Headrest according to any one of claims 1 to 4, **characterised in that** the receiving means (10) is pivotably mounted on the member (12), so as to allow an angular articulation of the threaded rod (9) with respect to said member in case of impact applied by a head on the receiving face (7) of the casing (5), in order to allow an additional energy absorption to that provided by said casing.

6. Headrest according to any one of claims 1 to 5, **characterised in that** the member (12) is arranged to be able to be deformed plastically in traction in case of impact applied by a head on the top of said headrest, in order to allow an additional energy absorption to that provided by the casing (5).

7. Headrest according to any one of claims 1 to 6, **characterised in that** the member (12) is in the general shape of a conduit for receiving the threaded rod (9).
